# EUROPEAN PATENT SPECIFICATION

(11) **EP 3 985 341 B1**
(45) Date of publication and mention of the grant of the patent: **02.07.2025**
(21) Application number: 21202819.5
(22) Date of filing: 15.10.2021
(51) Int. Cl.: F28F 9/02

(54) **HEAT EXCHANGER**
WÄRMETAUSCHER
ÉCHANGEUR DE CHALEUR

(30) Priority: 16.10.2020 KR 20200134403
(43) Date of publication of application: 20.04.2022
(73) Proprietor: LG Electronics Inc., SEOUL 07336 (KR)
(72) Inventor: KIM, Sungwoo, 08592 Seoul (KR); KIM, Hongseong, 08592 Seoul (KR); JUNG, Seungmo, 08592 Seoul (KR); LEE, Hanchoon, 08592 Seoul (KR)
(74) Representative: Vossius & Partner Patentanwälte Rechtsanwälte mbB

(56) References cited:
- EP-A1- 2 507 573
- EP-A1- 3 339 764
- EP-A1- 3 598 052
- US-A- 6 032 728

## Description

### Field of the disclosure

The present disclosure relates to a heat exchanger and, more particularly, to a heat exchanger that is improved in manufacturing speed and manufacturing cost because it has an assembly-type header structure, that has fewer brazing apertures in a product, and that can easily cope with the specification of a product.

### Related Art

In general, a heat exchanger can be used as a condenser or an evaporator in a refrigerant cycle system composed of a compressor, a condenser, an expansion device, and an evaporator. A heat exchanger can be installed in a vehicle, a refrigerator, an air conditioner, or the like, and can make a refrigerant exchange heat with air.

A heat exchanger can be classified into a fin tube type heat exchanger, a micro channel type heat exchanger, etc. A heat exchanger may include tubes through which a refrigerant flows and a header that is connected to the tubes and distributes a refrigerant to the tubes. In the fin tube type heat exchanger, fins for heat dissipation may be coupled between the tubes.

In the related art, an inlet is formed on a side of a header through slotting or wire cutting and then a tube is inserted into the inlet. For example, a header having a plurality of insertion holes in which ends of tubes are inserted has been disclosed in Korean Patent No. 10-0644135 in the related art.

However, in the related art, there is a problem that since slotting should be performed on one header by the number of tubes, the manufacturing speed is decreased and the efficiency in mass production is deteriorated.

Further, in the related art, there is a problem that specific molds for manufacturing heat exchangers are needed in accordance with the sizes of the heat exchangers, so the manufacturing efficiency is deteriorated.

Further, in the related art, when components are coupled through brazing, there is a problem that brazing apertures may be generated by tolerance of machining equipment or tolerance between an inlet and a tube.

Further, in the related art, there is a problem that since the blade of the machining equipment becomes worn out, it is difficult to form an inlet, in which a tube is inserted, in a predetermined shape and the blade should be frequently replaced.

JP 2013 139965 relates to a heat exchanger used, for example, as an evaporator, condenser, or heater in an air conditioning system for a vehicle, and to a method for manufacturing the same.

US 6 032 728 discloses a heat exchanger comprising tubes, header modules coupled to both ends of the tubes and a pair of header cases providing a space therein, and having the header modules inserted in the spaces.

### [Prior Art Document]

### [Patent Document]

Korean Patent No. 10-0644135 (publication date, 2006. 11. 10)

Korean Utility Model Publication No. 20-2007-0017024 (publication date, 2009. 04. 27)

Korean Utility Model No. 20-0432601 (publication date, 2006. 12. 05)

Korean Patent No. 10-1447072 (publication date, 2014. 10. 06)

Korean Patent Application Publication No. 10-2019-0097632 (publication date, 2019. 08. 21)

### SUMMARY OF THE DISCLOSURE

An objective of the present disclosure is to solve the problems described above.

Another objective of the present disclosure is to provide a heat exchanger that can improve the efficiency in mass production by improving the manufacturing speed and the manufacturing cost.

Another objective of the present disclosure is to provide a heat exchanger the can be flexibly custom-made in accordance with a product having the heat exchanger without a specific mold.

Another objective of the present disclosure is to provide a heat exchanger that can reduce tolerance due to brazing and can improve stability of a product.

Another objective of the present disclosure is to provide an inlet in which a tube is inserted without separate slotting or wire cutting.

In order to achieve the objectives, a heat exchanger is provided as recited in claim 1.

Accordingly, a heat exchanger can be flexibly custom-made in accordance with a product having the heat exchanger without a specific mold, and it is possible to increase efficiency in mass production by improving the manufacturing sped and manufacturing cost.

The insertion hole of the header blocks may be elongated in a direction in which the tube panel is elongated.

Accordingly, the contact area between the tube panel and the header block can be increased, tolerance due to brazing can be reduced, and stability of a product can be increased.

The header block includes an upper coupling block and a lower coupling block that form the insertion hole by being combined with each other with the tube panel therebetween.

Accordingly, it is possible to provide an inlet in which a tube is inserted without separate slotting or wire cutting, and it is possible to increase efficiency in mass production by improving the manufacturing sped and manufacturing cost.

The tube panel is configured such that a fin is formed by coupling flat portions and a tube hole is formed by coupling an upper panel and a lower panel, each of which has the flat portion and the recession, a bottom of the upper coupling block is formed in a shape corresponding to a shape of the upper panel and is in contact with the upper panel, and a top of the lower coupling block is formed in a shape corresponding to a shape of the lower panel and is in contact with the lower panel.

The upper coupling block includes a first coupling groove recessed upward from a bottom of the upper coupling block at both ends of the upper coupling block, and the lower coupling block may include a first coupling protrusion protruding upward from a top of the lower coupling block at both ends of the lower coupling block and inserted in the first coupling groove.

Accordingly, it is possible to form a uniform shape by coupling the upper coupling block and the lower coupling block at a predetermined position.

The heat exchanger may include a spacer disposed at both ends of the header block between the upper coupling block and the lower coupling block, and spacing the upper coupling block and the lower coupling block by a thickness of the tube panel.

Accordingly, it is possible to secure a width of the insertion hole by the thickness of the tube panel.

The spacer may protrude from at least any one of the upper coupling block and the lower coupling block.

The spacer may include: an upper spacer protruding downward from the bottom of the upper coupling block; and a lower spacer protruding upward from the top of the lower coupling block and being in contact with the upper spacer, and the header block may include: a first coupling groove recessed upward from the upper spacer; and a first coupling protrusion protruding upward from the lower spacer and inserted in the first coupling groove.

The upper coupling block may include a second coupling protrusion protruding upward from a top of the upper coupling block, the lower coupling block may include a second coupling groove recessed upward from a bottom of the lower coupling block, and the second coupling protrusion of any one of the plurality of header blocks may be inserted in the second coupling groove of another one of the plurality of header blocks.

The plurality of header blocks each may include: a second coupling protrusion protruding upward from a top of the header block; and a second coupling groove recessed upward from a bottom of the header block, and the second coupling protrusion of any one of the plurality of header blocks may be inserted in the second coupling groove of another one of the plurality of header blocks.

The header case may include: a case groove that is recessed on a top of the header case to face the space and in which the second coupling protrusion positioned at an upper end of the header module is inserted; and an insertion block that protrudes to the space from a bottom of the header case and that is inserted in the second coupling groove positioned at a lower end of the header module.

The case groove may be elongated rearward from a front end of the header case.

Accordingly, insertion of the second coupling protrusion can be guided in a sliding type.

The heard case may include a cap block inserted from a front end of the case groove, guided toward the second coupling protrusion inserted in the case groove by the case groove, and being in contact with a surface of the second coupling protrusion.

The header case may include a slit formed by opening another surface of the header case to be able to be connected with the second coupling groove, and the insertion block may be inserted in the second coupling groove through the slit from the outside.

The header case may include a rib disposed adjacent to both sides of the header case in the header case, protruding forward from a rear surface of the header case, and limiting an insertion depth of the header module in contact with the header module.

The rib may be elongated in an up-down direction and may be in contact with the plurality of header blocks.

The heat exchanger may further include a pressing screw fastened in a nut hole formed on a top and/or a bottom of the heard case, and pressing the header module inserted in the space in an up-down direction by being rotated in one direction.

Accordingly, there is an advantage that it is possible to reduce tolerance between the header block and the tube panel by pressing the header block.

The tube panel may be divided into a plurality of fins and a plurality of tubes formed between and the plurality of fins, and the pressing screw may be disposed at positions corresponding to positions of the plurality of fins.

The header case may have an opening formed at a top of the header case and may include a cover block inserted in the opening and having a groove fitted to a second coupling protrusion of a header module inserted in the header case.

An exemplary method of manufacturing a heat exchanger may includes: inserting a tube panel between insertion holes formed in a header block; forming a header block by stacking a plurality of header blocks inserted in the tube panel; inserting the header block in a space of a header case; and brazing a heat exchanger including the header module and the header case.

The step of inserting of a tube panel between insertion holes may be to assemble a first coupling block and a second coupling block up and down with the tube panel therebetween.

The forming of a header block may include inserting a coupling protrusion formed at any one of the plurality of header blocks in a coupling groove formed at another one of the plurality of header blocks.

The details of other exemplary embodiments are included in the following detailed description and the accompanying drawings.

According to the heat exchanger of the present disclosure, one or more of the following effects can be achieved.

First, there is an advantage that the manufacturing speed and manufacturing cost are improved, whereby it is possible to increase the efficiency of mass production.

Second, there is an advantage that it is possible to manufacture a heat exchanger flexibly in a custom-made type in correspondence to the size of a product having the heat exchanger without a specific mold.

Third, there is an advantage that it is possible to reduce tolerance due to brazing and increase stability of a product.

Fourth, there is an advantage that it is possible to provide a structure in which a tube in inserted without separate slotting or wire cutting.

### BRIEF DESCRIPTION OF THE DRAWINGS

FIG. 1 is a view of a heat exchanger according to an embodiment of the present disclosure.
FIG. 2 is a view about the header H and the tube panel 10 shown in FIG. 1.
FIG. 3 is a view about a header module 200 included in the header H shown in FIG. 2 and a plurality of tube panels 10 inserted therein.
FIG. 4 is a view about any one of a plurality of header blocks 20 constituting the header module 200.
FIG. 5 is a view about a header block 20 in which a tube panel 10 is inserted.
FIG. 6 is a view showing the header block 20 of FIG. 5 in another direction.
FIG. 7 is a view about a header block 20' according to another embodiment.
FIG. 8 is a view about a header block 20" according to another embodiment.
FIGS. 9 and 10 are views showing that a plurality of header blocks 20a, 20b, 20c, ... are coupled. In detail, FIG. 9 shows the state in which a plurality of header blocks 20a, 20b, 20c, ... are separated and FIG. 10 shows the state in which a plurality of header blocks 20a, 20b, 20c, ... are combined.
FIG. 11 is an exploded view showing a header block 20 in which a tube block 10 is inserted.
FIG. 12 is a view showing a header module 200 separated from a header case 30 according to an embodiment of the present disclosure.
FIG. 13 is an enlarged view showing a portion of the header case 30 shown in FIG. 12. In detail, FIG. 13 shows a cap block 327 and a pressing screw 36 separated from the header case 30.
FIG. 14 is a cross-sectional view showing a cross-section of a header H.
FIG. 15 is an enlarged view showing another portion of the header case 30 shown in FIG. 12. FIG. 15 shows an insertion block 337 separated from the header case 30.
FIG. 16 is a view showing a header module 200 separated from a header case 30' according to another embodiment of the present disclosure.
FIGS. 17 and 18 are enlarged views showing a portion of the header case 30' shown in FIG. 16.
FIG. 19 is a block diagram showing an exemplary method of manufacturing a heat exchanger.

### DESCRIPTION OF EXEMPLARY EMBODIMENTS

The thickness or size of components is exaggerated, omitted, or schematically shown in the drawings for convenience and clarity of description. The size or area of components does not generally reflect the actual size or area

Hereinafter, the present disclosure will be described with reference to the drawings illustrating a heat exchanger according to exemplary embodiments of the present disclosure.

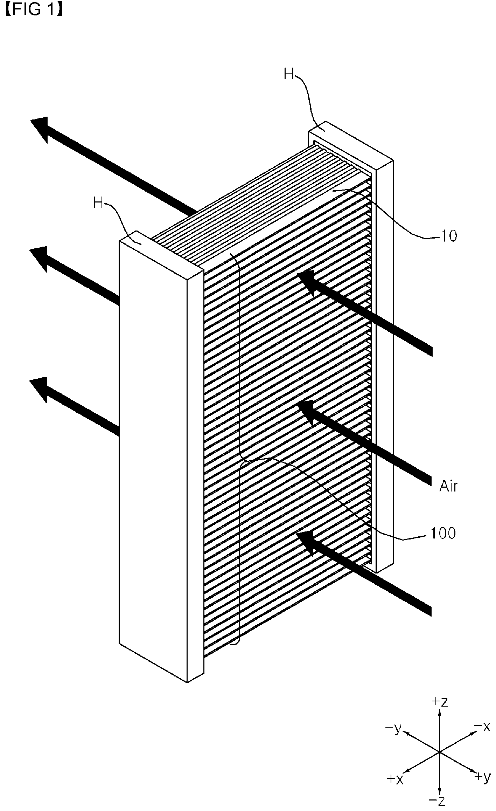

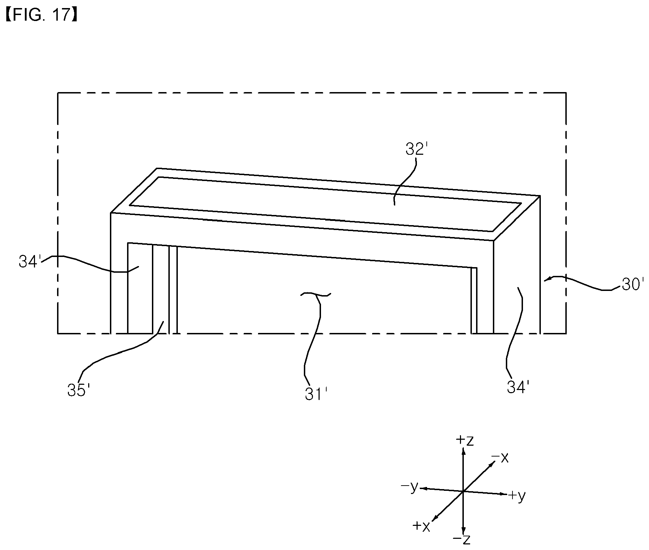

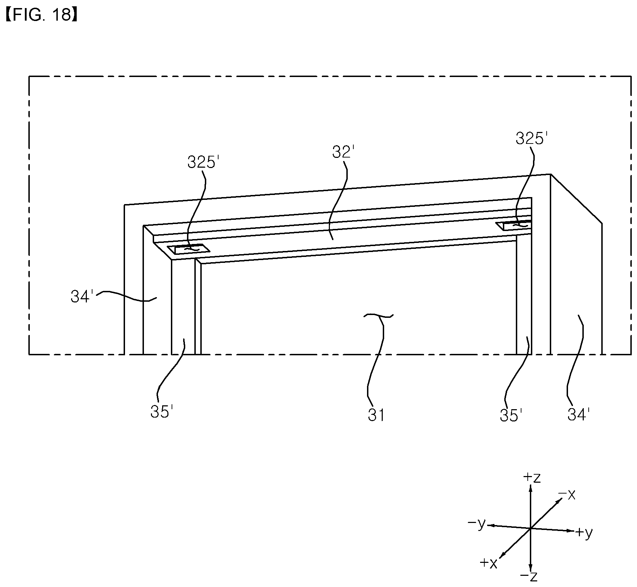

Hereafter, directions are defined with respect the heat exchanger according to an embodiment of the present disclosure and components thereof on the basis of the coordinate system shown in FIGS. 1 to 19.

The directions in which the x-axis extends may be defined as front/rear directions. The direction in which the +x-axis extends from the origin may be the front direction and the direction in which the -x-axis extends from the origin may be the rear direction. The directions in which the y-axis extends may be defined as left/right directions. The direction in which the +y-axis extends from the origin may be the right direction and the direction in which the -y-axis extends from the origin may be the left direction. The directions in which the z-axis extends may be defined as up/down directions. The direction in which the +z-axis extends may be the up direction and the direction in which the -z-axis extends may be the down direction.

Referring to FIGS. 1 to 19, all the portions that are inserted, coupled, fitted, contacted, bonded, and assembled of the components of a heat exchanger may be combined by brazing. A filler material may be applied to all the portions that are inserted, coupled, fitted, contacted, bonded, and assembled of the components of a heat exchanger. A heat exchanger is put in a furnace with a filer material applied and exposed at a high temperature for a predetermined time, whereby it can be brazed. Brazing may not be described in the following description.

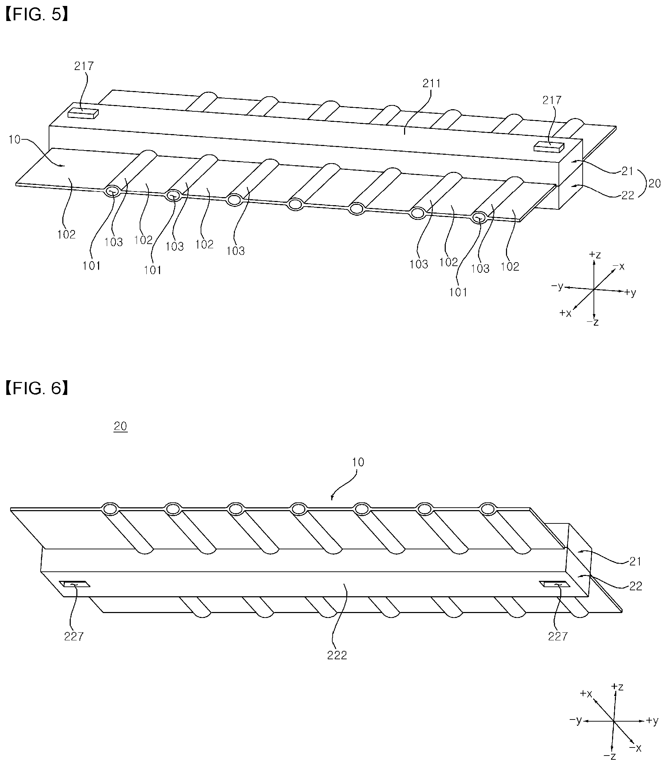

Referring to FIG. 1, a heat exchanger according to the present invention includes a tube panel 10. The tube panel 10 may be elongated in the front-rear direction. A plurality of fins 102 and a plurality of tubes 103 are integrally formed, thereby being able to configure the tube panel 10 (see FIG. 5). A plurality of tube panels 10 is provided, whereby a tube panel module 100 may be configured.

The heat exchanger according to the present disclosure includes a header H. The header H is coupled to an end of the tube panel 10. The header H is provided in a pair and coupled to both ends of the tube panel 10, respectively. The headers H may be elongated in the up-down direction. A plurality of tube panels 10 may be spaced apart from each other and arranged in the longitudinal direction of the headers H.

A refrigerant may flow into any one of the pair of headers H. The refrigerant flowing inside can pass through the tubes of the tube panel 10. The refrigerant that has passed through the tubes can flow into the other one of the pair of headers H and then can be discharged out of the heat exchanger. Air can exchange heat with the refrigerant while passing through between a plurality of tube panels 10.

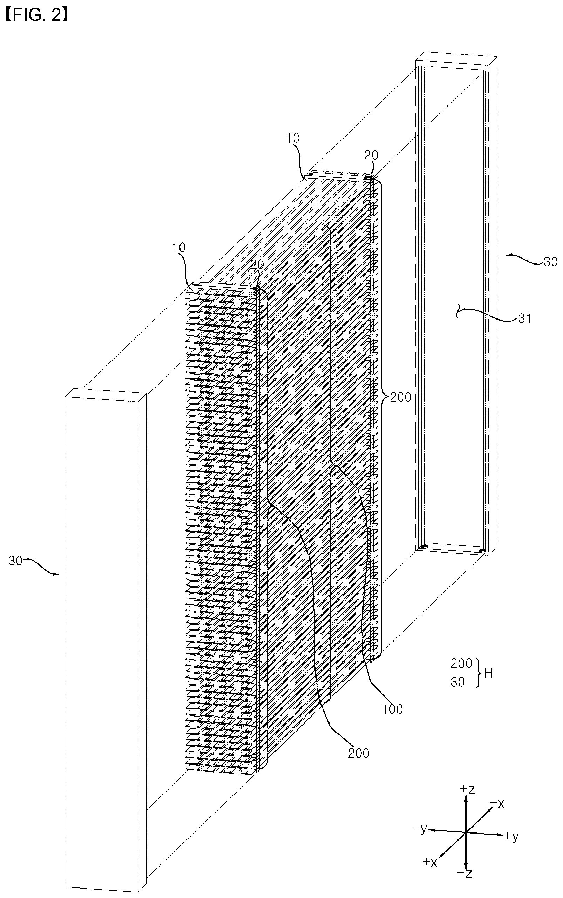

Referring to FIG. 2, the header H includes a header module 200 and a header case 30. The header H is configured by inserting the header module 200 in the header case 30. The header case 30 is open on the front surface so that the header module 200 is inserted, and provides a space 31 therein. The header module 200 is coupled to ends of the plurality of tube panels 10. The header module 200 is provided in a pair and may be coupled to both ends of the plurality of tube panels 10. When the header module 200 is inserted in the space 31, the plurality of tube panels 10 coupled to the header module 200 communicates with the space 31.

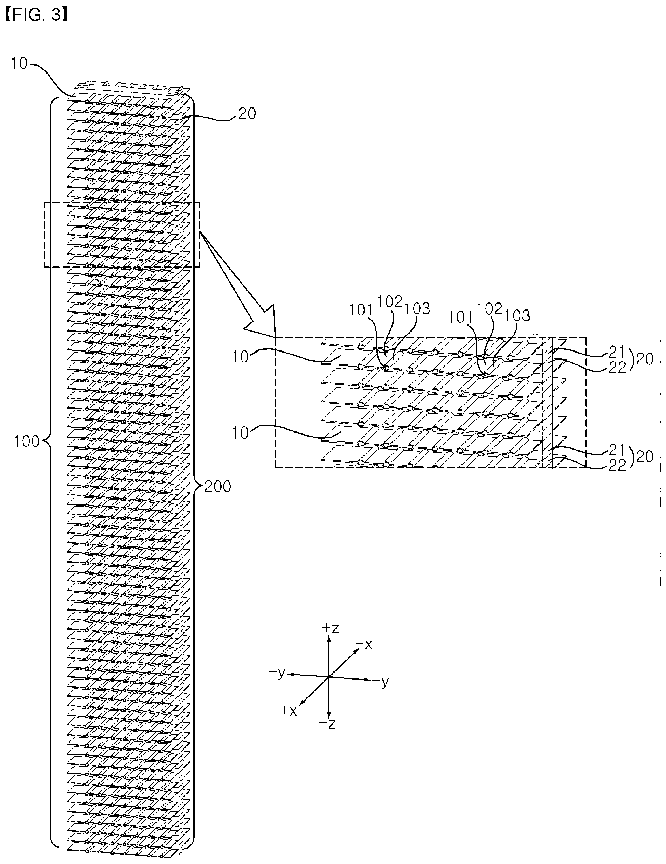

Hereafter, referring to FIG. 3, the header module 200 is formed by stacking a plurality of header blocks 20 preferably in the up-down direction. An end of the tube panel 10 is inserted in the header block 20. Both ends of the tube panel 10 may be inserted in a pair of header blocks 20, respectively. One header block 20 may be combined with one tube panel 10. A plurality of tube panels 10 may be inserted in a plurality of header blocks 20, respectively. A plurality of tube panels 10 may be stacked in the up-down direction in which a plurality of header blocks 20 are stacked. The header cases 30 may be elongated in the up-down direction in which a plurality of header blocks 20 are stacked.

A refrigerant may flow into any one of the pair of header cases 30. The refrigerant flowing in the header case 30 may pass through the tube panels 10 inserted in the header module 200. The refrigerant that has passed through the tube panels 10 may flow into the header 30 at the opposite side and then may be discharged out of the header case 30.

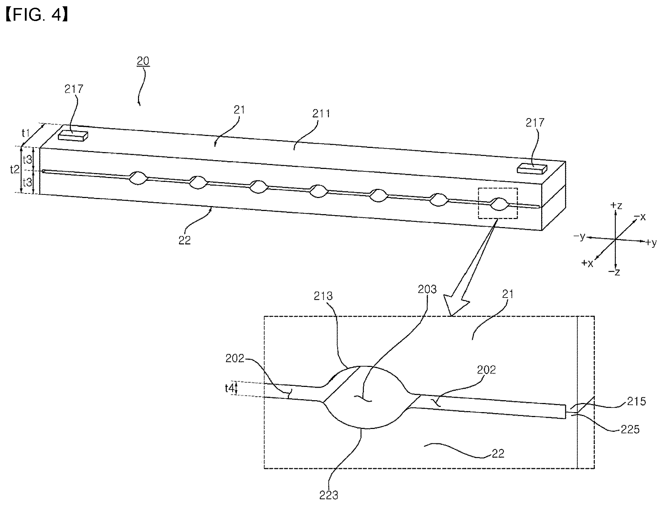

Hereafter, referring to FIG. 4, an insertion hole 202, 203 is formed in the header block 20. The tube panel 10 is inserted in the insertion hole 202, 203.

The tube panel 10 is composed of a plurality of fins 102 and a plurality of tubes 103. The plurality of fins 102 and the plurality of tubes 103 may be alternately arranged. The plurality of fins 102 and the plurality of tubes 103 may be arranged in the left-right direction.

The insertion hole 202, 203 have a shape corresponding to the tube panel 10 and the tube panel 10 may be inserted in close contact with the surfaces forming the insertion hole 202, 203. The tube panel 10 may pass through the insertion hole 202, 203.

The insertion hole 202, 203 includes fin insertion holes 202 having a shape corresponding to the shape of the fins 102. The fin insertion holes 202 have a width corresponding to the thickness of the fins 102. The fin insertion holes 202 have a slit shape. The insertion hole 202, 203 includes tube insertion holes 203 corresponding to the shape of the tubes 103. The tube insertion holes 203 have various shapes such as a circle, or an ellipse, or preferably a rectangle. The fin insertion holes 202 and the tube insertion holes 203 are provided as several pieces and may be arranged alternately in the left-right direction. The fin insertion holes 202 and the tube insertion holes 203 may be continuously formed.

The plurality of fins 102 is inserted in the plurality of fin insertion holes 202. The plurality of tubes 103 is inserted in the plurality of tube insertion holes 203.

The header block 20 includes an upper coupling block 21 and a lower coupling block 22. The upper coupling block 21 and the lower coupling block 22 are combined with the tube panel 10 therebetween, thereby being able to for, the insertion hole 202, 203. The bottom of the upper coupling block 21 may come in contact with a surface of the tube panel 10 and the top of the lower coupling block 22 may come in contact with another surface of the tube panel 10.

The header block 20 may be elongated in the left-right direction in which the plurality of fins 102 and tubes 103 are arranged. The header block 20 may be elongated in the front-rear direction in which the tube panel 10 is elongated. The length t1 of the header block 20 elongated in the front-rear direction may be similar to the height t2 in the up-down direction of the header block 20. The length t1 of the upper coupling block 21 and the lower coupling block 22 that are elongated in the front-rear direction may be larger than the height t3 of the upper coupling block 21 of the lower coupling block 22. The insertion hole 202, 203 may be elongated in the header block 20 in the front-rear direction in which the tube panel 10 is elongated.

Accordingly, the contact area between the tube panel 10 and the header block 20 through the insertion hole 202, 203 may be increased. The center portion of the header block 20 is bent down and presses the tube panel 10 inserted in the insertion hole 202, 203, whereby the coupling force can be increased and apertures can be reduced in brazing.

Spacer 215 and 225 may be disposed between the upper coupling block 21 and the lower coupling block 22. The spacers 215 and 225 may be disposed at both ends of the header block 20. The spacers 215 and 225 can space the upper coupling block 21 and the lower coupling block 22 from each other by the thickness t4 of the tube panel 10. The insertion hole 202, 203 may be defined by being surrounded by the bottom of the upper coupling block 21, the top of the lower coupling block 22, and the spacers 215 and 225.

Hereafter, referring to FIGS. 5 and 6, the header block 20 may include a second coupling protrusion 217 protruding upward from the top of the header block 20. The header block 20 may include a second coupling groove 227 recessed upward from the bottom of the header block 20. The second coupling groove 227 may be recessed in a shape corresponding to the second coupling protrusion 217. The second coupling protrusion 217 and the second coupling groove 227 may be positioned at positions corresponding to each other. The second coupling protrusion 217 may be inserted in the second coupling groove 227.

The second coupling protrusion 217 may protrude upward from the top of the upper coupling block 21. The second coupling groove 227 may be recessed upward from the bottom of the lower coupling block 22.

The second coupling protrusion 217 and the second coupling groove 227 may be formed as several pieces symmetrically at two sides on the top of the header block 20.

Accordingly, the upper coupling block 21 and the lower coupling block 22 may be disposed at 180 degrees with respect to each other, and the second coupling protrusions 217 may be inserted in the second coupling grooves 227.

The second coupling protrusions 217 and the second coupling grooves 227 may be formed in various shapes.

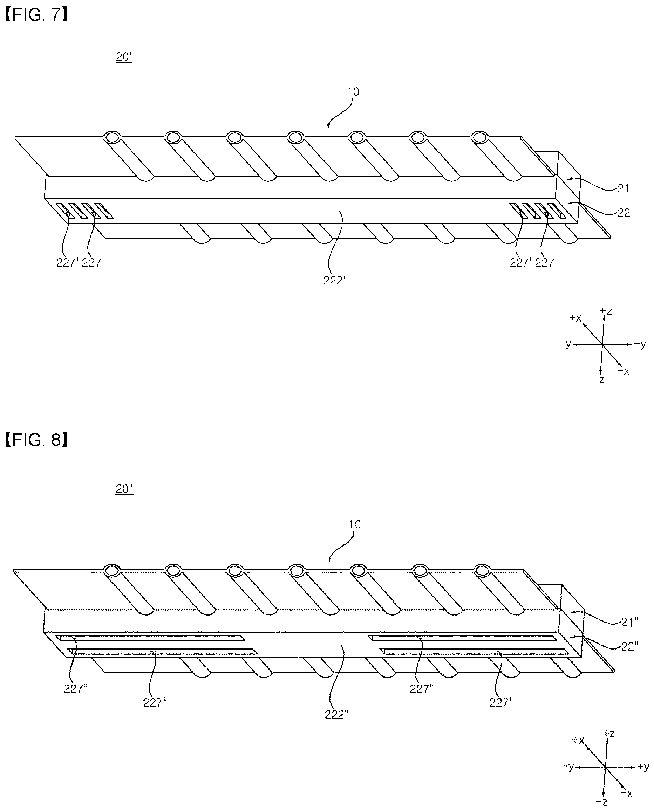

For example, referring to FIG. 7, a second coupling groove 227' may have a shape that is long in the front-rear direction. The second coupling grooves 227' may be provided at four positions at the left and right sides, respectively, on a header block 20'.

As another example, referring to FIG. 8, a second coupling groove 227" may have a shape that is long in the left-right direction. The second coupling groove 227" may be provided at four positions at the right side and two positions at the right side on a header block 20". These are only examples, and the shapes, numbers, and arrangement of the second coupling protrusion 217 and the second coupling grooves 227 may be variously changed. The shapes and sizes of the second coupling protrusion 217 and the second coupling grooves 227 may depend on the size of the entire heat exchanger.

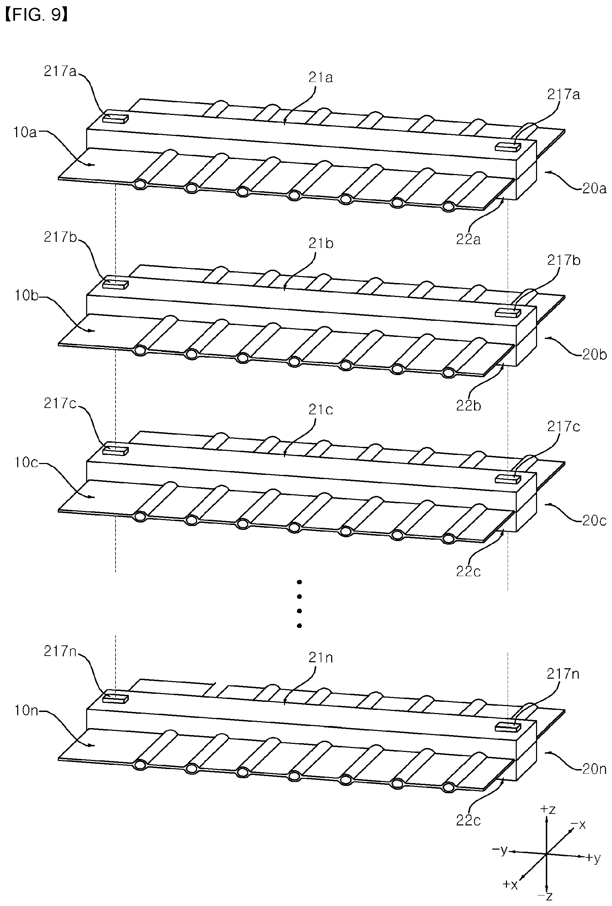

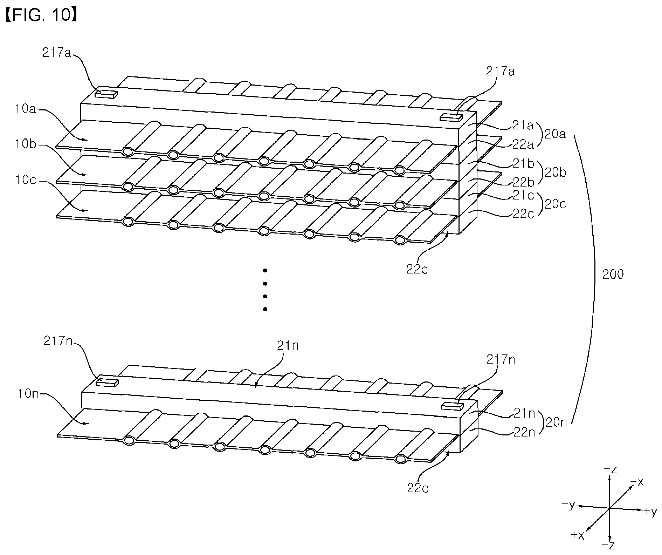

Referring to FIGS. 9 and 10, any one of the plurality of header blocks 20 is combined with another one of the plurality of header blocks 20. The second coupling protrusion 217 of any one of the plurality of header blocks 20 may be inserted in the second coupling groove 227 of another one of the plurality of header blocks 20.

For example, a first header block 20a may be coupled to the top of a second header block 20b. The second header block 20b may be coupled to the top of a third header block 20c. In this case, the second coupling protrusion 217b formed on the top of the second header block 20b may be inserted in the second coupling groove 227a (see 227 in FIG. 6) formed on the bottom of the first header block 20a. The second coupling protrusion 217c formed on the top of the third header block 20c may be inserted in the second coupling groove 227b (see 227 in FIG. 6) formed on the bottom of the second header block 20b. Through this process, the header module 20 may be formed by stacking a plurality of header blocks 20a, 20b, 20c, ..., and 20n. The number of the header blocks 20 to be stacked is not limited and may depend on the specification of a product.

A filer material may be applied between the plurality of header blocks 20 combined with each other. The filer material may be applied between the second coupling protrusion 217 and the second coupling groove 227 and between the top of the upper coupling block 21 and the bottom of the lower coupling block. The plurality of header blocks 20 may be combined with each other by brazing.

Accordingly, the plurality of header blocks 20 can be stacked and coupled to each other in the up-down direction. As the plurality of header blocks 20 are stacked in the up-down direction, the header module 20 can be formed and a plurality of tube panels 20 can be arranged in the up-down direction. The header blocks 20 may be manufactured in the same specification, the manufacturing cost can be reduced. It is possible to change the sizes and specifications of the header module 200 and the header H by changing only the number of the header blocks 20 that have the same specification and are stacked, so there is an advantage that it is possible to easily cope with a change of the size of a product.

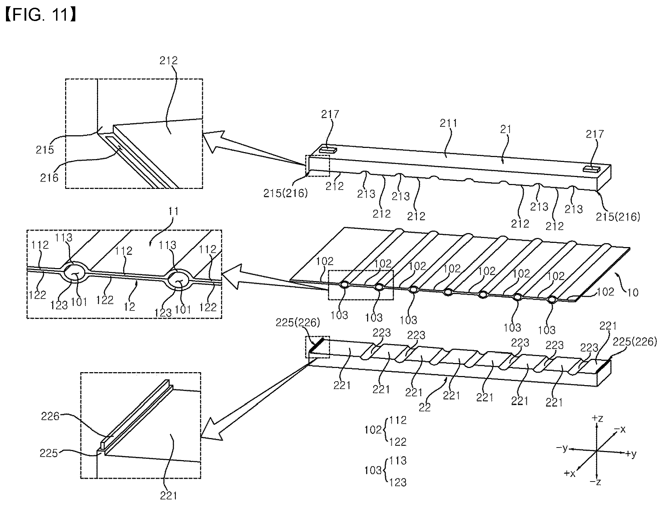

Referring to FIG. 11, the tube panel 10 is divided into an upper panel 11 and a lower panel 12. The upper panel 11 and the lower panel 12 are combined up and down with each other, whereby the fins 102 and tubes 103 of the tube panel 10 can be formed. A tube hole 101 through which a refrigerant flows is formed in the tube 103.

The upper panel 11 includes a first flat portion 112 formed at a position corresponding to the fin 102 and a first recession 113 formed at a position corresponding to the tube 103. The first flat portion 112 and the first recession 113 may be elongated in the front-rear direction. The first flat portion 112 and the first recession 113 may be provided as several pieces and may be arranged alternately in the left-right direction.

The lower panel 12 includes a second flat portion 122 formed at a position corresponding to the fin 102 and a second recession 123 formed at a position corresponding to the tube 103. The second flat portion 122 and the second recession 123 may be elongated in the front-rear direction. The second flat portion 122 and the second recession 123 may be provided as several pieces and may be arranged alternately in the left-right direction.

The first flat portion 112 and the second flat portion 122 are coupled to face each other, whereby the fin 102 is formed. The first recession 113 and the second recession 123 are coupled to face each other, whereby the tube hole 101 and tube 103 can be formed therein. The fin 102 may include a first flat portion 112 and a second flat portion 122. The tube 103 may include a first recession 113 and a second recession 123.

The bottom 212 of the upper coupling block 21 is formed in a shape corresponding to the shape of the upper panel 11. The bottom of the upper coupling block 21 come in contact and/or close contact with the upper panel 11. The bottom of the upper coupling block 21 may form a flat surface 212 at a position corresponding to the first flat portion 112. The bottom of the upper coupling block 21 may form a recession 213 recessed upward at a position corresponding to the first recession 113.

The top 221 of the lower coupling block 22 is formed in a shape corresponding to the shape of the lower panel 12. The top 221 of the lower coupling block 22 may come in contact and/or close contact with the lower panel 12. The top of the lower coupling block 22 may form a flat surface 21 at a position corresponding to the second flat portion 122. The top of the lower coupling block 22 may form a recession 223 recessed downward at a position corresponding to the second recession 123.

The upper coupling block 21 includes a first coupling groove 216. The first coupling groove 216 is recessed upward from the bottom of the upper coupling block 21 at both ends of the upper coupling block 21.

The lower coupling block 22 includes a first coupling protrusion 226. The first coupling protrusion 226 protrudes upward from the top of the lower coupling block 22 at both ends of the lower coupling block 22. The first coupling protrusion 226 is inserted in the first coupling groove 216.

A filer material may be applied to the surfaces on which the upper coupling block 21, the lower coupling block 22, and the tube panel 10 are in contact with each other. The upper coupling block 21, the lower coupling block 22, and the tube panel 10 may be coupled to each other by brazing.

The spacers 215 and 225 may be disposed at both ends of the header block 20 between the upper coupling block 21 and the lower coupling block 22. The spacers 215 and 225 can space the upper coupling block 21 and the lower coupling block 22 from each other by the thickness t4 (see FIG. 4) of the tube panel 10.

The spacers 215 and 225 may protrude from at least any one of the upper coupling block 21 and the lower coupling block 22. The spacers 215 and 225 may include an upper spacer 215 protruding downward from the bottom of the upper coupling block 21. The spacers 215 and 225 may include a lower spacer 225 protruding upward from the top of the lower coupling block 22. The lower spacer 225 can space the upper coupling block 21 and the lower coupling block 22 from each other by the thickness t4 (see FIG. 4) of the tube panel 10 by be in contact with the upper spacer 215.

The first coupling groove 216 may be formed in the upper spacer 215. The first coupling groove 216 may be recessed upward from the upper spacer 215. The width of the first coupling groove 216 may be smaller than the width of the upper spacer 215.

The first coupling protrusion 226 may protrude upward from the lower spacer 225. The width of the first coupling protrusion 226 may be smaller than the width of the lower spacer 225. The first coupling protrusion 226 may be inserted in the first coupling groove 216.

When the first coupling protrusion 226 is inserted in the first coupling groove 216, the upper spacer 215 and the lower spacer 225 can be in contact with each other to face each other.

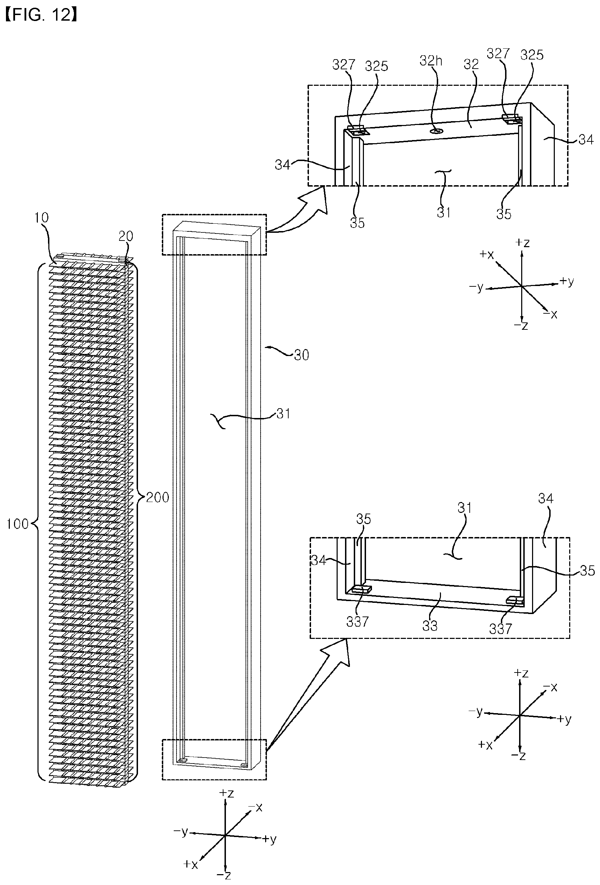

Hereafter, referring to FIG. 12, the header case 30 may be open on a first side and may provide a space 31 therein. The space 31 may be surrounded by the top 32, bottom 33, both sides 34,and the rear surface (not indicated by reference numeral) of the header case 30.

The header module 200 is inserted in the space 31 of the header case 30. The header module 200 can close the open first side of the header case 30 by being inserted and/or coupled in the header case 30. The header cases 30 may be elongated in the up-down direction in which the header blocks 20 are stacked.

When the header module 200 is inserted and/or coupled in the header case 30, the tube panels 10 coupled to the header module 200 can communicate with the space 31 of the header case 30.

A refrigerant may flow into the header case 30 or may be discharged from the header case 30. The heat exchanger may include a pair of header cases 30. A refrigerant flowing in any one of the pair of header cases 30 may be discharged outside through the other one of the pair of header cases 30.

The refrigerant flowing in any one header case 30 can sequentially pass through the space 31 and the tube panels 10. The refrigerant that has passed through the tube panel 10 can pass through the space 31 formed at the other one header case 30 and then can be discharged out of the header case.

The second coupling protrusion 217 may protrude upward from the upper end of the header module 200. The second coupling protrusion 217 may be the one formed at the header block 20 disposed at the upper end of the header module 200.

The second coupling groove 227 may be recessed upward from the lower end of the header module 200. The second coupling groove 227 may be the one formed at the header block 20 disposed at the lower end of the header module 200.

A case groove 325 may be formed on the inner surface of the header case 30. The case groove 325 may be recessed on the top of the header case 30 to face the space 31. The case groove 325 may have a shape corresponding to the second coupling protrusion 217. The second coupling protrusion 217 positioned at the upper end of the header module 200 may be inserted in the case groove 325.

An insertion block 337 may be formed on the inner surface of the header case 30. The insertion block 337 may protrude into the space 31 from the bottom of the header case 30. The insertion block 337 may include a shape corresponding to the second coupling groove 227. The insertion block 337 may be inserted in the second coupling groove 227 positioned at the lower end of the header module 200.

The header case 30 may include ribs 35 therein. The ribs 35 may be disposed adjacent to both sides 34 of the header case 30. The ribs 35 may protrude toward the space 31 from both sides 34 of the header case 30. The ribs 35 may be spaced rearward apart from the open first side of the header case 30, whereby a step may be formed. The ribs 35 may protrude forward from the rear surface of the header case 30. The ribs 35 may come in contact with the header module 200.

Accordingly, the ribs 35 can adjust the depth at which the header module 200 is inserted in the header case 30.

The ribs 35 may be elongated in the longitudinal direction of the header case 30. The ribs 35 may be elongated in the up-down direction. The ribs 35 may be elongated in the direction in which the header blocks 20 are stacked. The ribs 35 may come in contact with a plurality of header blocks 20. The ribs 35 may come in contact with a plurality of tube panels 10.

Accordingly, the ribs 35 can uniformly adjust the depth at which the plurality of header blocks 20 are inserted in the header case 30.

Accordingly, the ribs 35 space the plurality of tube panels 10, which protrude rearward from the header blocks 20 through the insertion holes 202, 203, forward from the header blocks 20, thereby being able to prevent the tube panels 10 from protruding rearward from the header blocks and to align the tube panels 10.

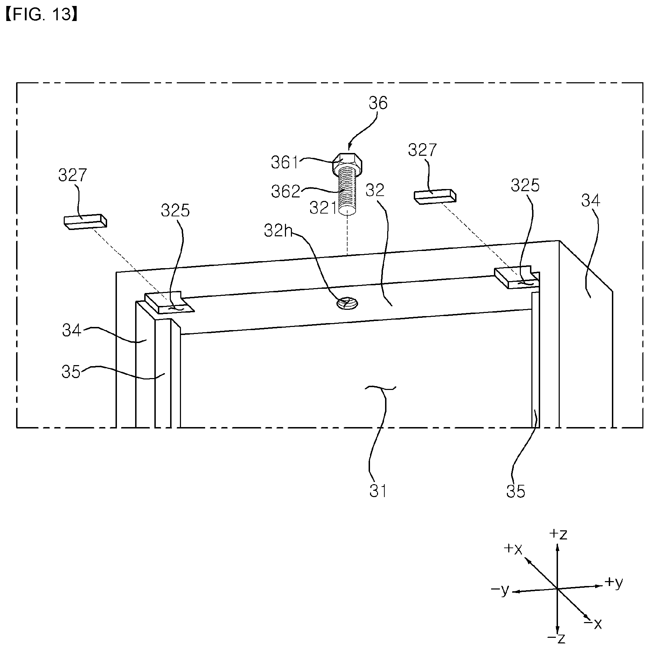

Hereafter, referring to FIG. 13, the case groove 325 formed on the top of the header case 30 may be elongated rearward from the front end of the header case 30. The case groove 325 can guide insertion of the second coupling protrusion 217 positioned at the upper end of the header module 200. The second coupling protrusion 217 may be inserted through the front end of the case groove 325. The second coupling protrusion 217 can move rearward from the front of the case groove 325.

The header case 30 may include a cap block 327. The case groove 325 can guide insertion of the cap block 327. The cap block 327 has a width substantially the same as the width of the case groove 325, so it can be fitted in the case groove 325. The cap block 327 may be inserted through the front end of the case groove 325. The cap block 327 can come in contact with a surface of the second coupling protrusion 217 by moving rearward along the case groove 325. The cap block 327 is brazed in contact with the second coupling protrusion 217, whereby it can be coupled to the case groove 325 and the second coupling protrusion 217.

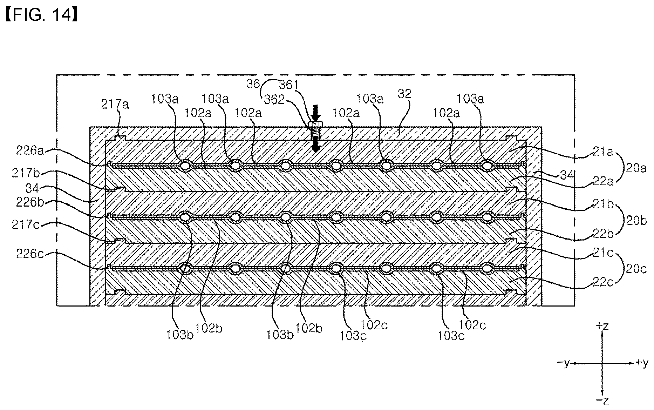

Referring to FIGS. 13 and 14, a nut hole 32h may be formed on the top 32 and/or the bottom 33 of the header case 30. A pressing screw 36 can be inserted and fastened in the nut hole 32h. The pressing screw 36 can be inserted into the space 31 by being rotated in one direction along the nut hole 32h. The pressing screw 36 can be moved out of the space 31 by being rotated in another direction along the nut hole 32h.

The pressing screw 36 can press in the up-down direction the header module 200 inserted in the space 31 by being rotated in one direction. The pressing screw 36 can come in contact with the upper end and/or the lower end of the header module 200 by being rotated in one direction. The pressing screw 36 can come in contact with the upper coupling block 21 disposed at the upper end of the header module 200 and/or the lower coupling block 22 disposed at the lower end of the header module 200 by being rotated in one direction.

For example, the pressing screw 36 may be inserted in the nut hole 32h formed on the top 32. The pressing screw 36 can press downward the header module 200 by being rotated in one direction.

For example, the pressing screw 36 may be inserted in the nut hole 32h formed on the top 32. The pressing screw 36 can press upward the header module 200 by being rotated in one direction.

The pressing screw 36 may include a screw head 361, and a screw body 362 protruding to a side from the screw head 361 and having a thread. The screw body 362 can be fastened in the nut hole 32h. A thread having a corresponding space to the fitted to the thread of the screw body 362 may be formed around the nut hole 32h.

The plurality of fins 102 and the plurality of tubes 103 of the tube panel 10 may be arranged in the left-right direction. The pressing screw 36 may be disposed at a position corresponding to a fin 102. The pressing screw 36 may be disposed over a fin 102.

The pressing screw 36 and the nut hole 32h may be formed at several positions on the top 32 and/or the bottom 33 of the header case 30. The plurality of nut holes 32h and the plurality of pressing screws 36 may be arranged in the left-right direction.

The plurality of nut holes 32h and the plurality of pressing screws 36 may be disposed at positions corresponding to the positions of the plurality of fins 102. The plurality of nut holes 32h and the plurality of pressing screws 36 may be disposed over the plurality of fins 102.

When external force is applied to a plurality of stacked header blocks 20 in the up-down direction, bending stress or compression stress may be applied. The plurality of stacked header blocks 20 may be bent or compressed (hereafter, referred to as deformation) in the up-down direction. The deformation may occur in a direction in which the insertion holes 202, 203 formed at the header blocks 20 is decreased in size.

Accordingly, the header block 20 presses the tube panel 10 inserted in the insertion holes 202, 203, whereby the contact force between the header block 20 and tube panel 10 can be increased and they can be more stably coupled.

Accordingly, the tolerance or aperture between the header block 20 and the tube panel 10 can be reduced, and airtightness can be secured in brazing.

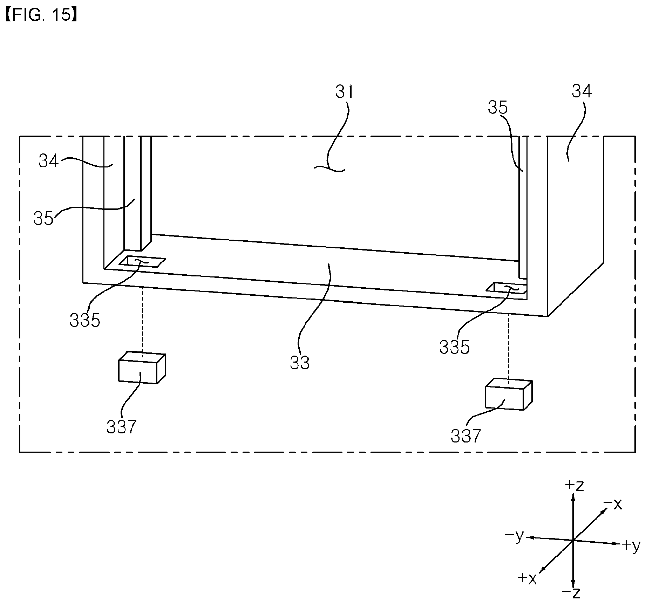

Hereafter, referring to FIG. 15, a slit 336 may be formed by opening the bottom 33 of the header case 30. When the header module 200 is inserted in the space 31, the slit 335 can be connected to the second coupling groove 227. The slit 335 may be formed at a position corresponding to the second coupling groove 227 positioned at the lower end of the header module 200.

The insertion block 337 may have a shape corresponding to the slit 335 and may pass through the slit 335. The insertion block 337 may protrude toward the space from the bottom 33 of the header case 30 through the slit 335. The insertion block 337 may be inserted in the second coupling groove 227 through the slit 335.

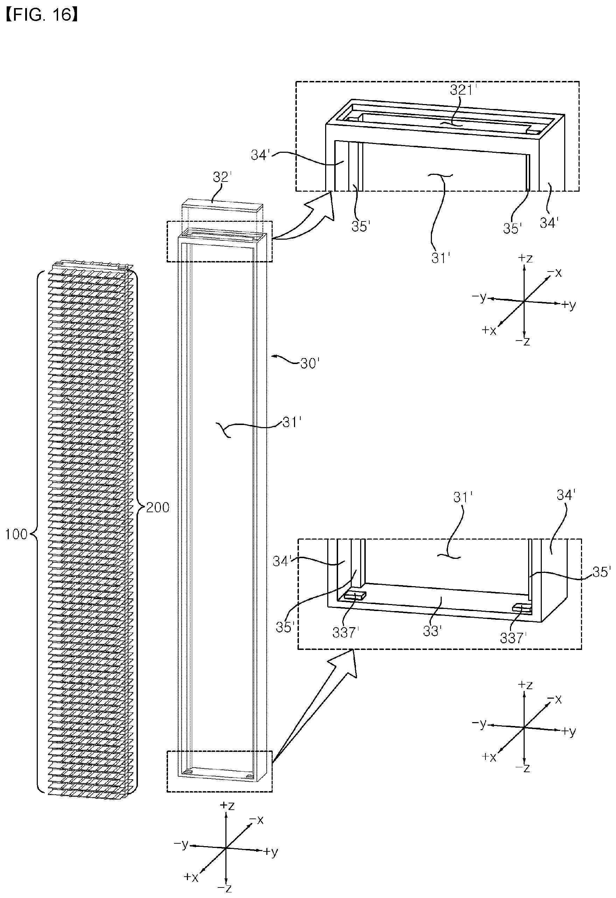

Referring to FIGS. 16 to 18, the same configuration is not described and different configuration is described between the header case 30' according to another embodiment of the present disclosure and the header case 30 described with reference to FIGS. 12 to 15.

The header case 30' according to another embodiment of the present disclosure may have an opening 321' on the top thereof. The header case 30' may include a cover block 32' inserted in the opening 321'.

The cover block 32' may have a shape corresponding to the opening 321' formed at the top of the header case 30'. The cover block 32' may be fitted in the opening 321'.

The header module 200 may be inserted in the header case 30'. The second coupling protrusion 217 may protrude from the upper end of the header module 200. The cover block 32' has a groove formed on the bottom thereof, so it can be coupled to the second coupling protrusion 217 formed at the upper end of the header module 200. The groove 325' may be formed at a position corresponding to the second coupling protrusion 217. The groove 325' may have a shape and a number corresponding to those of the second coupling protrusion 217. The groove 325' may be referred to as a case groove 325'.

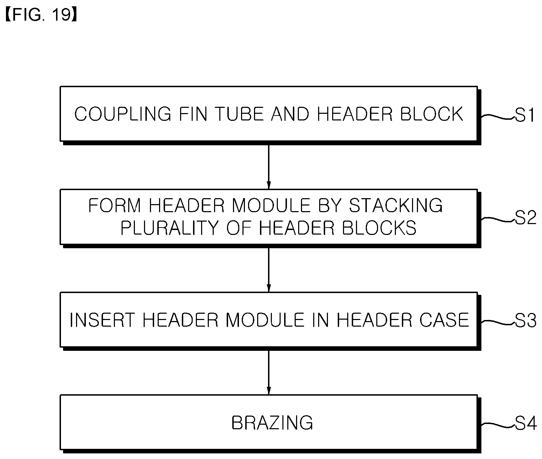

Hereafter, an exemplary method of manufacturing a heat exchanger according to an embodiment of the present disclosure is described with reference to FIG. 19.

The method of manufacturing a heat exchanger may include a step S1 of inserting a tube panel 10 into the insertion hole 202, 230 formed in a header block 20.

The method of manufacturing a heat exchanger may include a step S2 of forming a header module 200 by stacking a plurality of header blocks 20 with tube panels 10 inserted therein after step S1.

The method of manufacturing a heat exchanger may include a step S3 of inserting the header module 200 in the space 31 of a header case 30 after step S2.

The method of manufacturing a heat exchanger may include a step S4 of brazing the heat exchanger including the header module 200 and the header case 30 after step S3. A filer material may be applied to the insertion, contact, coupling, and assembling portions of components before brazing S4.

The step S1 of inserting a tube panel 10 into the insertion hole 202, 203 of a header block 20 may be to couple a first coupling block 21 and a second coupling block 22 up and down the tube panel 10 therebetween.

The step S2 of forming a header module may include a step of inserting a coupling protrusion 217 formed at any one of the plurality of header blocks 20 into a coupling groove 227 formed at another one of the plurality of header blocks 20.

For example, a first header block 20a may be coupled to the top of a second header block 20b. The second header block 20b may be coupled to the top of a third header block 20c. In this case, the second coupling protrusion 217b formed on the top of the second header block 20b may be inserted in the second coupling groove 217a formed on the bottom of the first header block 20a. The second coupling protrusion 217c formed on the top of the third header block 20c may be inserted in the second coupling groove 217b formed on the bottom of the second header block 20b.

## Claims

1. A heat exchanger comprising:
a plurality of tube panels (10) including a plurality of tubes (103) elongated in one direction and a plurality of fins (102);
a pair of header modules (200) coupled to both ends of the plurality of tube panels (10); and
a pair of header cases (30) having an open side, providing a space therein, and having the pair of header modules (200) inserted in the spaces, respectively, such that the tubes (103) communicate with the spaces,
wherein the pair of header modules (200) are each composed of a plurality of header blocks (20) stacked and coupled to each other, and
an insertion hole (202, 203) in which the tube panel (10) is inserted is formed at each of the plurality of header blocks (20);
wherein the insertion hole (202, 203) includes:
fin insertion holes (202) having a shape corresponding to the shape of the fins (102); and
tube insertion holes (203) corresponding to the shape of the tubes (103),
wherein
the tube insertion hole (203) has a circle or an ellipse shape, the fin insertion hole (202) has a slit shape,
the fin insertion holes (202) and the tube insertion holes (203) are provided as several pieces and arranged alternately in a left-right direction,
wherein the header block (20) includes an upper coupling block (21) and a lower coupling block (22) that forms the insertion hole (202, 203) by being combined with each other with the tube panel (10) therebetween,
wherein the tube panel (10) is configured such that a fin is formed by coupling flat portions (112, 122) and a tube hole (101) is formed by coupling an upper panel (11) and a lower panel (12), each of which has the flat portion (112, 122) and the recession (113, 123),
a bottom of the upper coupling block (21) is formed in a shape corresponding to a shape of the upper panel (11) and is in contact with the upper panel (11),
a top of the lower coupling block (22) is formed in a shape corresponding to a shape of the lower panel (12) and is in contact with the lower panel (12), and
wherein the upper coupling block (21) includes a first coupling groove (216) recessed upward from a bottom of the upper coupling block (21) at both ends of the upper coupling block (21), and
the lower coupling block (22) includes a first coupling protrusion (226) protruding upward from a top of the lower coupling block (22) at both ends of the lower coupling block (22) and inserted in the first coupling groove (216).

2. The heat exchanger of claim 1, comprising a spacer (215, 225) disposed at both ends of the header block (20) between the upper coupling block (21) and the lower coupling block (22), and spacing the upper coupling block (21) and the lower coupling block (22) by a thickness of the tube panel (10), wherein the spacer (215, 225) protrudes from at least any one of the upper coupling block (21) and the lower coupling block (22).

3. The heat exchanger of claim 1 or 2, wherein the plurality of header blocks (20) each include:
a second coupling protrusion (217) protruding upward from a top of the header block (20); and
a second coupling groove (227) recessed upward from a bottom of the header block (20), and
the second coupling protrusion (217) of any one of the plurality of header blocks (20) is inserted in the second coupling groove (227) of another one of the plurality of header blocks (20).

4. The heat exchanger of claim 3, wherein the header case (30) includes:
a case groove (325) that is recessed on a top of the header case (30) to face the space and in which the second coupling protrusion (217) positioned at an upper end of the header module (200) is inserted; and
an insertion block (337) that protrudes to the space from a bottom of the header case (30) and that is inserted in the second coupling groove (227) positioned at a lower end of the header module (200).

5. The heat exchanger of claim 4, wherein the case groove (325) is elongated rearward from a front end of the header case (30) and guides insertion of the second coupling protrusion (217), and the header case (30) includes a cap block (327) inserted from a front end of the case groove (325), guided toward the second coupling protrusion (217) inserted in the case groove (325) by the case groove (325), and being in contact with a surface of the second coupling protrusion (217).

6. The heat exchanger of claim 4, or 5, wherein the header case (30) includes a slit (335) formed by opening another surface of the header case (30) to be able to be connected with the second coupling groove (227), and
the insertion block (337) is inserted in the second coupling groove (227) through the slit (335) from the outside.

7. The heat exchanger of any one of claims 1 to 6, wherein the header case (30) includes a rib (35) disposed adjacent to both sides of the header case (30) in the header case (30), protruding forward from a rear surface of the header case (30), and limiting an insertion depth of the header module (200) in contact with the header module (200), and
the rib (35) is elongated in an up-down direction and is in contact with the plurality of header blocks (20).

8. The heat exchanger of any one of claims 1 to 7, further comprising a pressing screw (36) fastened in a nut hole (32h) formed on a top and/or a bottom of the header case (30), and pressing the header module (200) inserted in the space in an up-down direction by being rotated in one direction.

9. The heat exchanger of any one of claims 1 to 8, wherein the header case (30, 30') has an opening (321') formed at a top of the header case (30, 30') and includes a cover block (32') inserted in the opening (321') and having a groove fitted to a second coupling protrusion (217) of a header module (200) inserted in the header case (30).

## Patentansprüche

1. Wärmetauscher, der aufweist:
mehrere Rohrplatten (10), die mehrere in einer Richtung verlängerten Rohren (103) und mehrere Lamellen (102) aufweisen,
ein Paar von Rohrverteilermodulen (200), die mit beiden Enden der mehreren Rohrplatten (10) gekoppelt sind; und
ein Paar Rohrverteilergehäuse (30), die eine offene Seite aufweisen, die einen Raum darin bereitstellen, und die das Paar der Rohrverteilermodule (200) aufweisen, die jeweils in die Räume eingesetzt sind, so dass die Rohre (103) mit den Räumen in Verbindung stehen,
wobei das Paar der Rohrverteilermodule (200) jeweils aus mehreren Rohrverteilerblöcken (20) besteht, die gestapelt und miteinander gekoppelt sind, und
eine Einsatzöffnung (202, 203), in das die Rohrplatte (10) eingesetzt ist, an jedem der mehreren Rohrverteilerblöcke (20) ausgebildet ist;
wobei die Einsatzöffnung (202, 203) aufweist:
Lamelleneinsatzöffnungen (202), die eine Form aufweisen, die der Form der Lamellen (102) entspricht; und
Rohreinsatzöffnungen (203), die der Form der Rohre (103) entsprechen,
wobei
die Rohreinsatzöffnung (203) eine Kreis- oder Ellipsenform aufweist, die Lamelleneinsatzöffnung (202) eine Schlitzform aufweist,
die Lamelleneinsatzöffnungen (202) und die Rohreinsatzöffnungen (203) als mehrere Teile vorgesehen und abwechselnd in einer Links-Rechts-Richtung angeordnet sind,
wobei der Rohrverteilerblock (20) einen oberen Kopplungsblock (21) und einen unteren Kopplungsblock (22) aufweist, die die Einsatzöffnungen (202, 203) bilden, indem sie miteinander mit der Rohrplatte (10) dazwischen kombiniert sind,
wobei die Rohrplatte (10) so konfiguriert ist, dass eine Lamelle durch Koppeln von flachen Abschnitten (112, 122) gebildet wird und ein Rohröffnung (101) durch Koppeln einer oberen Platte (11) und einer unteren Platte (12) gebildet wird, die jeweils den flachen Abschnitt (112, 122) und die Aussparung (113, 123) aufweisen,
eine Unterseite des oberen Kopplungsblocks (21) in einer Form ausgebildet ist, die einer Form der oberen Platte (11) entspricht, und mit der oberen Platte (11) in Kontakt steht,
eine Oberseite des unteren Kopplungsblocks (22) in einer Form ausgebildet ist, die einer Form der unteren Platte (12) entspricht, und mit der unteren Platte (12) in Kontakt steht, und
wobei der obere Kopplungsblock (21) eine erste Kopplungsnut (216) aufweist, die an beiden Enden des oberen Kopplungsblocks (21) von einer Unterseite des oberen Kopplungsblocks (21) nach oben ausgespart ist, und
der untere Kopplungsblock (22) einen ersten Kopplungsvorsprung (226) aufweist, der an beiden Enden des unteren Kopplungsblocks (22) von einer Oberseite des unteren Kopplungsblocks (22) nach oben vorsteht und in die erste Kopplungsnut (216) eingesetzt ist.

2. Wärmetauscher nach Anspruch 1, der einen Abstandshalter (215, 225) aufweist, der an beiden Enden des Rohrverteilerblocks (20) zwischen dem oberen Kopplungsblock (21) und dem unteren Kopplungsblock (22) angeordnet ist und den oberen Kopplungsblock (21) und den unteren Kopplungsblock (22) um eine Dicke der Rohrplatte (10) beabstandet, wobei der Abstandshalter (215, 225) aus mindestens einem beliebigen des oberen Kopplungsblocks (21) und des unteren Kopplungsblocks (22) vorsteht.

3. Wärmetauscher nach Anspruch 1 oder 2, wobei die mehreren Rohrverteilerblöcke (20) jeweils aufweisen:
einen zweiten Kopplungsvorsprung (217), der von einer Oberseite des Rohrverteilerblocks (20) nach oben vorsteht; und
eine zweite Kopplungsnut (227), die von einer Unterseite des Rohrverteilerblocks (20) nach oben ausgespart ist, und
der zweite Kopplungsvorsprung (217) eines beliebigen der mehreren Rohrverteilerblöcke (20) in die zweite Kopplungsnut (227) eines anderen der mehreren Rohrverteilerblöcke (20) eingesetzt ist.

4. Wärmetauscher nach Anspruch 3, wobei das Rohrverteilergehäuse (30) aufweist:
eine Gehäusenut (325), die an einer Oberseite des Rohrverteilergehäuses (30) so ausgespart ist, dass sie dem Raum zugewandt ist, und in die der an einem oberen Ende des Rohrverteilermoduls (200) positionierte zweite Kopplungsvorsprung (217) eingesetzt ist; und
einen Einsatzblock (337), der von einer Unterseite des Rohrverteilergehäuses (30) zum dem Raum vorsteht und in die an einem unteren Ende des Rohrverteilermoduls (200) positionierte zweite Kopplungsnut (227) eingesetzt ist.

5. Wärmetauscher nach Anspruch 4, wobei die Gehäusenut (325) von einem vorderen Ende des Rohrverteilergehäuses (30) nach hinten verlängert ist und das Einsetzen des zweiten Kopplungsvorsprungs (217) führt, und das Rohrverteilergehäuse (30) einen Kappenblock (327) aufweist, der von einem vorderen Ende der Gehäusenut (325) eingesetzt wird, von der Gehäusenut (325) zum zweiten Kopplungsvorsprung (217) geführt wird , der in die Gehäusenut (325) eingesetzt ist, und der mit einer Oberfläche des zweiten Kopplungsvorsprungs (217) in Kontakt steht.

6. Wärmetauscher nach Anspruch 4 oder 5, wobei das Rohrverteilergehäuse (30) einen Schlitz (335) aufweist, der durch Öffnen einer anderen Oberfläche des Rohrverteilergehäuses (30) gebildet wird, um mit der zweiten Kopplungsnut (227) verbunden werden zu können, und
der Einsatzblock (337) von außen durch den Schlitz (335) in die zweite Kopplungsnut (227) eingesetzt wird.

7. Wärmetauscher nach einem der Ansprüche 1 bis 6, wobei das Rohrverteilergehäuse (30) eine Rippe (35) aufweist, die benachbart zu beiden Seiten des Rohrverteilergehäuses (30) im Rohrverteilergehäuse (30) angeordnet ist, die von einer Rückseite des Rohrverteilergehäuses (30) nach vorne vorsteht und eine Einstecktiefe des Rohrverteilermoduls (200) in Kontakt mit dem Rohrverteilermodul (200) begrenzt, und die Rippe (35) in einer Auf-Ab-Richtung verlängert ist und mit den mehreren Rohrverteilerblöcken (20) in Kontakt steht.

8. Wärmetauscher nach einem der Ansprüche 1 bis 7, der ferner eine Druckschraube (36) aufweist, die in einem Mutteröffnung (32h) befestigt ist, die an einer Oberseite und/oder einer Unterseite des Rohrverteilergehäuses (30) ausgebildet ist, und die auf das in den Raum eingesetzte Rohrverteilermodul (200) durch Drehen in einer Richtung in Aufwärts-Abwärts-Richtung drückt.

9. Wärmetauscher nach einem der Ansprüche 1 bis 8, wobei das Rohrverteilergehäuse (30, 30') eine Öffnung (321') aufweist, die an einer Oberseite des Rohrverteilergehäuses (30, 30') ausgebildet ist, und einen Abdeckblock (32') aufweist, der in die Öffnung (321') eingesetzt ist und eine Nut aufweist, die an einen zweiten Kopplungsvorsprung (217) eines Rohrverteilermoduls (200) angepasst ist, der in das Rohrverteilergehäuse (30) eingesetzt ist.

## Revendications

1. Échangeur de chaleur, comprenant :
une pluralité de panneaux de tubes (10) comprenant une pluralité de tubes (103) s'étendant dans une direction et une pluralité d'ailettes (102) ;
deux modules collecteurs (200) raccordés aux deux extrémités de chacun des panneaux de la pluralité de panneaux de tubes (10) ; et
une paire de boîtiers collecteurs (30) ayant un côté ouvert, formant un espace intérieur, les deux modules collecteurs (200) étant insérés chacun dans un espace respectif, de sorte que les tubes (103) communiquent avec les espaces,
où les deux modules collecteurs (200) sont constitués chacun d'une pluralité de blocs collecteurs (20) empilés et raccordés les uns aux autres, et
un trou d'insertion (202, 203) où le panneau de tubes (10) est inséré est formé sur chaque bloc de la pluralité de blocs collecteurs (20) ;
où le trou d'insertion (202, 203) comprend :
des trous d'insertion d'ailettes (202) dont la forme correspond à la forme des ailettes (102) ; et
des trous d'insertion de tubes (203) correspondant à la forme des tubes (103),
où
le trou d'insertion de tube (203) est de forme circulaire ou elliptique, le trou d'insertion d'ailette (202) est en forme de fente,
les trous d'insertion d'ailette (202) et les trous d'insertion de tube (203) sont prévus en pluralité et disposés de manière alternée dans la direction de la gauche vers la droite,
où le bloc collecteur (20) comprend un bloc d'accouplement supérieur (21) et un bloc d'accouplement inférieur (22) formant le trou d'insertion (202, 203) par combinaison, le panneau de tubes (10) étant intercalé entre eux,
où le panneau de tubes (10) est configuré de sorte qu'une ailette est formée par accouplement de parties planes (112, 122) et qu'un trou tubulaire (101) est formé par accouplement d'un panneau supérieur (11) et d'un panneau inférieur (12), chacun de ceux-ci présentant la partie plane (112, 122) et le renfoncement (113, 123),
le dessous du bloc d'accouplement supérieur (21) présente une forme correspondant à la forme du panneau supérieur (11) et est en contact avec le panneau supérieur (11),
le dessus du bloc d'accouplement inférieur (22) présente une forme correspondant à la forme du panneau inférieur (12) et est en contact avec le panneau inférieur (12), et
où le bloc d'accouplement supérieur (21) présente une première rainure d'accouplement (216) ménagée vers le haut depuis le dessous du bloc d'accouplement supérieur (21) aux deux extrémités du bloc d'accouplement supérieur (21), et
le bloc d'accouplement inférieur (22) présente une première saillie d'accouplement (226) s'étendant vers le haut depuis le dessus du bloc d'accouplement inférieur (22) aux deux extrémités du bloc d'accouplement inférieur (22), et insérée dans la première rainure d'accouplement (216).

2. Échangeur de chaleur selon la revendication 1, comprenant une entretoise (215, 225) disposée aux deux extrémités du bloc collecteur (20) entre le bloc d'accouplement supérieur (21) et le bloc d'accouplement inférieur (22), et espaçant le bloc d'accouplement supérieur (21) du bloc d'accouplement inférieur (22), de l'épaisseur du panneau de tubes (10), ladite entretoise (215, 225) s'étendant depuis le bloc d'accouplement supérieur (21) et/ou le bloc d'accouplement inférieur (22).

3. Échangeur de chaleur selon la revendication 1 ou la revendication 2, où chaque bloc de la pluralité de blocs collecteurs (20) comprend :
une deuxième saillie d'accouplement (217) s'étendant vers le haut depuis le dessus du bloc collecteur (20) ; et
une deuxième rainure d'accouplement (227) ménagée vers le haut depuis le dessous du bloc collecteur (20), et
où la deuxième saillie d'accouplement (217) d'un bloc quelconque de la pluralité de blocs collecteurs (20) est insérée dans la deuxième rainure d'accouplement (227) d'un autre bloc de la pluralité de blocs collecteurs (20).

4. Échangeur de chaleur selon la revendication 3, où le boîtier collecteur (30) comprend :
une rainure de boîtier (325) ménagé sur le dessus du boîtier collecteur (30) de manière à être opposée à l'espace, et dans laquelle est insérée la deuxième saillie d'accouplement (217) disposée à une extrémité supérieure du module collecteur (200); et
un bloc d'insertion (337) s'étendant dans l'espace depuis le dessous du boîtier collecteur (30) et inséré dans la deuxième rainure d'accouplement (227) disposée à une extrémité inférieure du module collecteur (200).

5. Échangeur de chaleur selon la revendication 4, où la rainure de boîtier (325) s'étend vers l'arrière depuis une extrémité avant du boîtier collecteur (30) et guide l'insertion de la deuxième saillie d'accouplement (217), et où le boîtier collecteur (30) comprend un bloc bouchon (327) inséré par une extrémité avant de la rainure de boîtier (325), guidé par la rainure de boîtier (325) vers la deuxième saillie d'accouplement (217) insérée dans la rainure de boîtier (325), et en contact avec une surface de la deuxième saillie d'accouplement (217).

6. Échangeur de chaleur selon la revendication 4 ou la revendication 5, où le boîtier collecteur (30) présente une fente (335) formée par ouverture d'une autre surface du boîtier collecteur (30) permettant sa connexion à la deuxième rainure d'accouplement (227), et
où le bloc d'insertion (337) est inséré depuis l'extérieur dans la deuxième rainure d'accouplement (227) par la fente (335).

7. Échangeur de chaleur selon l'une des revendications 1 à 6, où le boîtier collecteur (30) présente une nervure (35) disposée dans le boîtier collecteur (30) de manière adjacente aux deux côtés du boîtier collecteur (30), faisant saillie vers l'avant depuis une surface arrière du boîtier collecteur (30) et limitant une profondeur d'insertion du module collecteur (200) en contact avec le module collecteur (200), et où ladite nervure (35) s'étend dans la direction verticale et est en contact avec la pluralité de blocs collecteurs (20).

8. Échangeur de chaleur selon l'une des revendications 1 à 7, comprenant en outre une vis de pression (36) fixée dans un trou d'écrou (32h) formé sur le dessus et/ou le dessous du boîtier collecteur (30), et serrant le module collecteur (200) inséré dans l'espace vers le haut et vers le bas en étant tournée dans un sens.

9. Échangeur de chaleur selon l'une des revendications 1 à 8, où le boîtier collecteur (30, 30') présente une ouverture (321') formée sur le dessus du boîtier collecteur (30, 30'), et un bloc de couverture (32') inséré dans l'ouverture (321') et présentant une rainure ajustée à une deuxième saillie d'accouplement (217) d'un module collecteur (200) inséré dans le boîtier collecteur (30).
